# EUROPEAN PATENT APPLICATION

(11) **EP 0 822 063 A1**
(43) Date of publication of application: **04.02.1998**
(21) Application number: 97305652.6
(22) Date of filing: 28.07.1997
(51) Int. Cl.: B32B 27/08, B32B 29/00, B65D 65/40

(54) **Abuse resistant flexible package**

(30) Priority: 30.07.1996 US 688594
(71) Applicant: Fres-Co System Usa, Inc., Telford, Pennsylvania 1869-1033 (US)
(72) Inventor: Beer, Jeffrey S., Perkiomenville, Pennsylvania 18074 (US)
(74) Representative: Shaw, Laurence

(57) **Abstract**

A flexible package (20) for holding abrasive, greasy or oily material, such as dry pet food comprises a wall made up of layers. The outermost layer (40) may be polyester film, the next (44) Kraft paper, the third (48) Nylon and the innermost (52), polyethylene. Neighbouring layers are secured to each other by adhesive layers (42, 46, 50 respectively).

## Description

The invention relates to a flexible package and in particular to one adapted to contain particulate products such as dry pet foods and the like.

US-A-5491011 discloses a package having a wall comprising from exterior to interior low density polyethylene, ethylene-vinyl alcohol copolymer odour barrier, high density polyethylene and linear low density polyethylene. Such a package is intended to contain under vacuum abrasive dry pet foods.

It is one object of the invention to provide a package adapted to contain abrasive or sharp-edged dry pet foods or the like and which is well able to hold such contents secure irrespective of abuse. Typically the contents will be dog, cat or other grease or oil containing dry foods or the like. Typically the contents will be held under vacuum.

According to the invention in one aspect there is provided:
a package adapted to contain abrasive or oily or greasy particulate material, the package having a wall comprising in sequence from exterior to interior :
(a) a first layer consisting of a heat resistant and abrasion resistant material,
(b) a second layer, of a shock-absorbing and heat resistant material
(c) a third layer consisting of material resistant to puncture, heat, gas and chemicals, and
(d) a fourth layer, consisting of a moisture resistant, sealable film material.

According to another aspect of the invention there is provided a package as defined containing an abrasive or sharp edged grease or oil containing dry pet food or the like, the mouth of the package being sealed and the contents being held under vacuum.

Other features of the invention are set out in the dependant Claims.

In order that the invention may be well understood it will now be described by way of example only with reference to the accompanying diagrammatic drawings, in which
Figure 1 is an isometric view of one package of the invention;
Figure 2 is a greatly enlarged sectional view taken along line 2-2 of Figure 1 showing the laminated multi-layer package wall;
Figure 3 is an enlarged isometric view of portion of the package shown in Figure 1 showing a portion of the transparent outer layer of the package peeled upward to show the positioning of indicia on the inner surface of that layer to be visible therethrough; and
Figure 4 is an enlarged isometric view of portion of package shown in Figure 1, wherein the package includes the indicia printed un-reversed on the outer surface of an intermediate layer of the package to be visible through the transparent outer layer of the package.

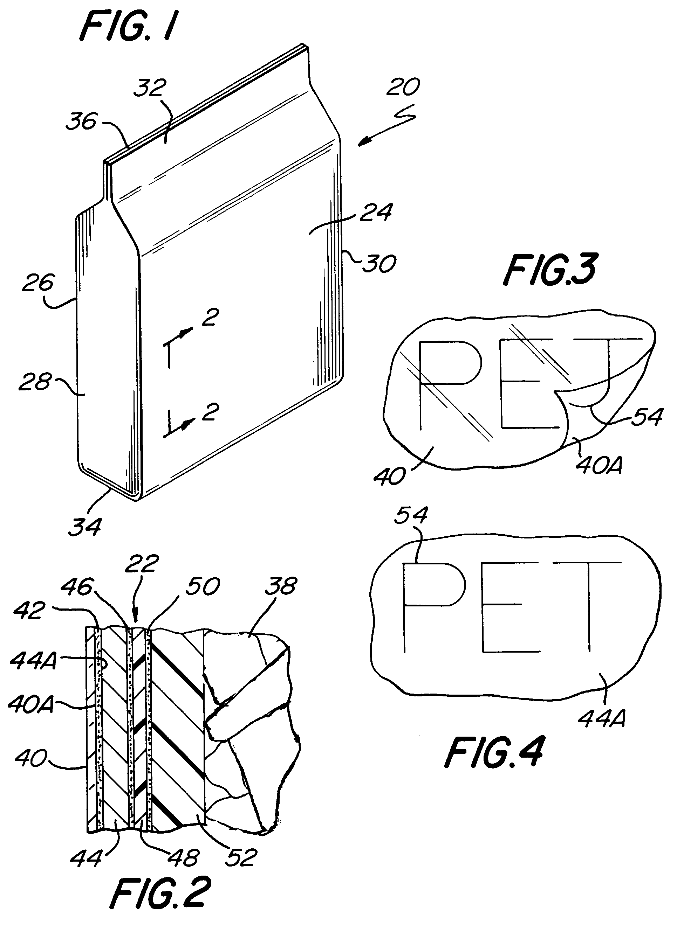

The package 20 of Figure 1 is designed to hold dry pet foods, such as dog and cat food, under vacuum. As shown, the package 20 is of the gussetted type and includes a front wall panel 24, a rear wall panel 26 and side gussets 28 and 30. The package wall formed from a single web of material 22 (Figure 2) which is formed into a tube and seamed along a longitudinal (e.g. vertical) seam (not shown) in a conventional manner. The finished package 20 includes a top edge portion 32 and a bottom edge portion 34. The bottom edge portion is permanently sealed. Preferably the top edge portion 32 is releasably sealed, i.e. the panels 22 and 24 are releasably sealed together along their respective top edges, to form a mouth 36 providing access to the contents of the package.

As shown in Figure 2, the web 22 is a laminate comprising four distinct layers of different materials which are securely bonded to one another, e.g. with adhesive. Listed from the outside of the package to the inside the layers are as follows: polyester film 40, an adhesive 42, Kraft paper 44, an adhesive 46, Nylon film 48, adhesive 50, and polyethylene film 52. The thickness of each layer can vary within the following limits which are given by way of example. The polyester film 40 is in the range of 0.0064 mm (0.00025 inch) to 0.036 mm (0.00142 inch), with one particularly suitable thickness of 0.012mm (0.00048 inch). The Kraft paper 44 is in the range of 0.025 mm (0.001 inch) to 0.1 mm (0.004 inch), with one particularly suitable thickness of 0.048 mm (0.0019 inch). The Nylon film 48 is in the range of 0.012 mm (0.00048 inch) to 0.05 mm (0.002 inch), with one particularly suitable thickness of 0.015 mm (0.0006 inch). The polyethylene film 52 is in the range of 0.025 mm (0.001 inch) to 0.2 mm (0.008 inch) thick, with one particularly suitable thickness of 0.4 mm (0.0015 inch). The adhesive layers 42, 46 and 50 are each formed of polyester urethane of a thickness in the range of 0.0025 mm (0.0001 inch) to 0.025 mm (0.001 inch), with one particularly suitable thickness of 0.005 mm. (0.0002 inch).

Each individual layer provides distinctly different properties to the laminate. The polyester film 40 provides abrasion resistance, heat resistance and a clear or transparent glossy surface. The layer 40 includes an inner surface 40A, immediately adjacent the adhesive layer 42, which is arranged to be reverse printed with any indicia 54, e.g. trademarks, identification of the contents, graphics, or the like. Such printing is done using conventional printing inks applied to the inner surface 40A or the layer 40. The reverse printed side of the layer 40 is coated with the adhesive 42 and laminated to the Kraft paper layer 44 to trap the ink under the clear polyester film layer 40 and so protect it from scuffing. The printing may instead be applied directly to the outer surface 44A (Figures 2 and 3) of the Kraft paper layer to be visible through the adhesive layer 42 and the polyester film layer 40, with the printing being protected from scuffing by the polyester layer 40.

The Kraft paper layer 34 is resistant to heat and provides a shock absorbing layer which is soft. In addition, the paper is resistant to heat. If the paper is bleached white, it provides an excellent background for the printed indicia which may eliminate the need to back-up the indicia with white ink or a white adhesive so that it can be readily be seen.

The inner surface of the Kraft paper layer 44 is coated with the adhesive 46 and laminated to the Nylon film layer 48. Alternatively, the adhesive 46 may be coated on the Nylon layer and laminated to the inner surface of the Kraft paper layer. The Nylon layer 48 provides resistance to puncture, a gas barrier (especially to oxygen), and odour barrier (to protect the product packaged from picking up off-odours) and a barrier to chemicals and fats (to prevent ingredients of the pet food product packaged from migrating through the other materials, e.g. the Kraft paper layer). Nylon is also resistant to heat.

The polyethylene film layer 52 provides a barrier to moisture vapour. It is also the material used to form a hermetic seal by thermal welding (or otherwise) because it forms the inner surface for the package 20. The inner surface of the film layer 50 forming the front panel 24 is releasably heat sealed to the inner surface of the film layer 50 so forming the rear panel 26 in a conventional manner, so that those layers will maintain a vacuum within the package, yet can readily peeled apart to form the mouth 36.

The term "polyethylene" is used herein to embrace a number of suitable sealant materials. Low density polyethylene, linear low density polyethylene, medium density polyethylene and high density polyethylene are included herein as "polyethylene" and are suitable for this invention. Other useful sealants are ethylene vinyl acetate (up to 30% VA content); ionomers; polypropylene; polybutylene; ethyleneacrylic acid acetate "EAA" and ethylene methylacrylic acid acetate "EMA". The sealant can be a blend of the above materials or a coextrusion of the above materials in order to provide additional specific properties such as hot tack, easy open seals, and improved stiffness. The selection of the sealant layer material is dependent on the nature of the product to be packaged, the seal strength expectations, and especially sealing method and conditions.

The adhesive layers provide secure bonding of the film layers to one another under the conditions of package use. The adhesive selection of choice is polyester-urethane, due to its heat and chemical resistance. This adhesive is applied to the film in solution. The liquid carrier is driven off using hot air leaving a thin layer of the adhesive. The adhesive is then thermally bonded to the second film. Other adhesives and other laminating processes are well known in the converting industry and may be useful for the production of the laminated material of the package of this invention. In this regard so-called "polymounting", where molten polymer instead of adhesive is used to bond two films together, may be used to form the packaging of this invention. Thermal lamination could be used to bond the sealant layer to the Nylon layer.

In use, the empty package 20 is filled with pet food 38 (Figure 2) or other sharp edged particulate material and sealed under vacuum in known manner.. The package will not leak even if the package is subjected to rough handling or abuse. Our investigations have established that while the prior art flexible packaging materials may provide some measure of protection against abuse-induced damage, e.g. leakage of vacuum packaged dry pet foods, the wall material of the invention provides substantially better abuse resistance, e.g. 50% greater than these materials. Such abuse may be shock, impact or the like. The invention is not limited to the embodiment shown. The package 20 may be a single pouch or sack, having gussetted sides. In such an arrangement the package may be formed of a pair of sheets of material 22 and sealed along their peripheral edges. The top edge of that package would also be preferably releasably sealed to form a mouth for the package. It is to be understood that other package configurations are within the scope of this invention.

## Claims

1. A package adapted to contain abrasive or oily or greasy particulate material, the package having a wall comprising in sequence from exterior to interior :
(a) a first layer (40) consisting of a heat resistant and abrasion resistant material,
(b) a second layer (44), of a shock-absorbing and heat resistant material,
(c) a third layer (48) consisting of material resistant to puncture, heat, gas and chemicals, and
(d) a fourth layer (52), consisting of a moisture resistant, sealable film material.

2. A package according to Claim 1, wherein the first layer (40) comprises a polyester film.

3. A package according to Claim 1 or 2, wherein the second layer (44) comprises Kraft paper.

4. A package according to Claim 1, 2 or 3, wherein the third layer (48) comprises Nylon film.

5. A package according to Claim 1, 2, 3 or 4, wherein the fourth layer (52) comprises polyethylene film.

6. A package according to any preceding Claim, wherein neighbouring layers are secured to each other by adhesive.

7. A package according to any preceding Claim, wherein the first layer (40) has a thickness of from 0.00064 mm to 0.036mm.

8. A package according to any preceding Claim, wherein the second layer (44) has a thickness of from 0.025 mm to 0.1 mm.

9. A package according to any preceding Claim, wherein the third layer (48) has a thickness of from 0.012 mm to 0.05 mm.

10. A package according to any preceding Claim, wherein the fourth layer (52) has a thickness of from 0.025 mm to 0.2 mm.

11. A package according to Claims 7 to 10, wherein the first layer (40) is 0.012 mm thick, the second layer (44) is 0.048 mm thick, the third layer (48) is 0.015 mm thick and the fourth layer (52) is 0.4 mm thick.

12. A package according to any preceding Claim, wherein the first layer (40) is transparent, and indicia are located between the first layer (40) and the second layer (44) whereby the indicia are visible through the first film layer (40).

13. A sealed package comprising a package according to any preceding Claim, containing an abrasive or sharp edged grease or oil containing dry pet food or the like (38), the mouth (36) of the package being sealed, the contents (38) being under vacuum.
